# EUROPEAN PATENT SPECIFICATION

(11) **EP 4 375 815 B1**
(45) Date of publication and mention of the grant of the patent: **01.10.2025**
(21) Application number: 22306735.6
(22) Date of filing: 24.11.2022
(51) Int. Cl.: G06F 3/0346

(54) **MODE-DEPENDENT REPRESENTATION OF A USER-BORNE MAGNETIC DEVICE**
MODUSABHÄNGIGE DARSTELLUNG EINES VOM BENUTZER GETRAGENEN MAGNETISCHEN GERÄTS
REPRÉSENTATION DÉPENDANTE DU MODE D'UN DISPOSITIF MAGNÉTIQUE PORTÉ PAR L'UTILISATEUR

(43) Date of publication of application: 29.05.2024
(73) Proprietor: Advanced Magnetic Interaction, AMI, 38170 Seyssinet-Pariset (FR)
(72) Inventor: Hautson, Tristan, 38170 Seyssinet-Pariset (FR); Riou, Sébastien, 38170 Seyssinet-Pariset (FR)
(74) Representative: Peterreins Schley

(56) References cited:
- US-A1- 2017 010 690
- US-A1- 2018 011 597

## Description

### TECHNICAL FIELD

The present disclosure relates to the technical field of determining and/or tracking a location of passive accessories, more specifically to a computer-implemented method for controlling a representation of a user-borne device according to one of one or more user-borne device modes on an output device, and to a system for controlling a representation of a user-borne device according to one of one or more user-borne device modes.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

A user-operation of the user-borne device within a sensing volume created by the plurality of magnetometers may be represented on an output device (e.g., a screen) to a user. Specifically, a manipulation of the user-borne device within the sensing volume may be reproduced as a manipulation of a virtual object on the output device. Current applications may comprise different types of user-borne devices and/or different functions of user-borne devices.

The object of the present disclosure is to provide a computer-implemented method and a system which enable an improved control of a representation of a different types and functions of user-borne devices on an output device.

Document US20170010690A1 discloses a terminal. At least one of content display and power saving for the terminal may be controlled based on a location of an object and a direction indicated by the object. Document US20180011597A1 discloses an electronic device including a touch screen configured to display at least one graphic object for executing an operation on the electronic device.

### SUMMARY

The present disclosure relates to a computer-implemented method for controlling a representation of a user-borne device according to one of one or more user-borne device modes on an output device as defined in claim 1, and a system for controlling a representation of a user-borne device according to one of one or more user-borne device modes on an output device as defined in claim 15. The dependent claims depict embodiments of the present disclosure. According to a first aspect of the present disclosure, a computer-implemented method for controlling a representation of a user-borne device according to one of one or more user-borne device modes on an output device is provided. The method comprises obtaining magnetic field measurements associated with at least one magnetic object and measured with a plurality of magnetometers. The at least one magnetic object is coupled to the user-borne device. The method further comprises obtaining user-borne device mode data indicative of predetermined operating ranges of the one or more user-borne device modes. The user-borne device mode data comprises a plurality of predetermined operating ranges of the one or more user-borne device modes, wherein a predetermined operating range comprises a predetermined orientation interval indicative of magnetic object orientations. In addition, the method comprises determining a user-borne device location based on the collected magnetic field measurements. Furthermore, the method comprises determining a user-borne device mode based on the user-borne device location and on the user-borne device mode data. The method also comprises representing the user-borne device on the output device, and controlling the representation of the user-borne device according to the determined user-borne device mode. The computer implemented method may provide an automatic recognition of a desired user-borne device mode, for instance a currently used user-borne device type and/or a user-borne device function, based on the predetermined operating ranges and the determined user-borne device location.

According to a second aspect of the present disclosure, a system for controlling a representation of a user-borne device according to one of one or more user-borne device modes on an output device is provided. The system comprises a user-borne device, wherein the user-borne device comprises at least one magnetic object. Furthermore, the system comprises a plurality of magnetometers configured to perform magnetic field measurements associated with the at least one magnetic object. In addition, the system comprises an output device. The system is configured to execute a computer-implemented method according to the first aspect of the present disclosure. The system may provide an automatic recognition of a desired user-borne device mode, for instance a currently used user-borne device type and/or a user-borne device function, based on the predetermined operating ranges and the determined user-borne device location.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: schematically illustrates a process flow diagram of a computer-implemented method for controlling a representation of a user-borne device according to one of one or more user-borne device modes on an output device according to the first aspect of the present disclosure;
- **Fig. 2**: schematically illustrates the computer-implemented method according to the first aspect of the present disclosure in more detail;
- **Fig. 3**: is a schematic view of a system for controlling a representation of a user-borne device according to one of one or more user-borne device modes on an output device according to a second aspect of the present disclosure;
- **Fig. 4**: is a schematic view of a first example system according to the second aspect of the present disclosure wherein the user-borne device is controlled according to a first user-borne device mode;
- **Fig. 5**: is a schematic view of a second example system according to the second aspect of the present disclosure wherein the user-borne device is controlled according to a second user-borne device mode;
- **Fig. 6**: is a schematic view of a third example system according to the second aspect of the present disclosure wherein the user-borne device is controlled according to a third user-borne device mode;
- **Fig. 7**: is a schematic view of the third example system according to the second aspect of the present disclosure wherein the user-borne device is controlled according to a fourth user-borne device mode;

### DETAILED DESCRIPTION

Embodiments of the computer-implemented method and the system for controlling a representation of a user-borne device according to one of one or more user-borne device modes on an output device according to the present disclosure will be described in reference to the drawings as follows.

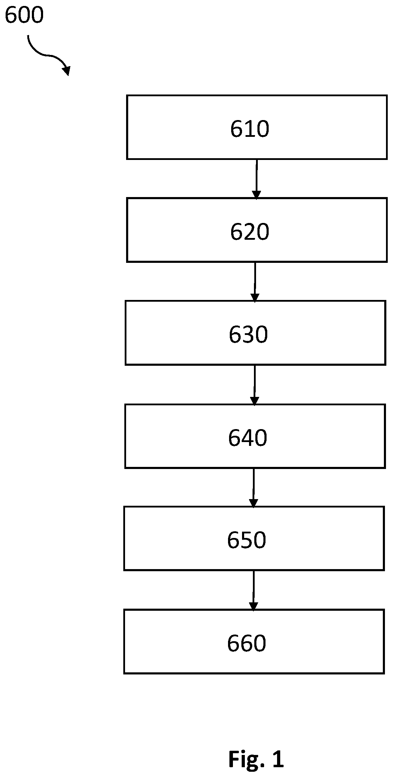

Fig. 1 schematically illustrates a computer-implemented method 600 for controlling a representation of a user-borne device according to one of one or more user-borne device modes on an output device according to the first aspect of the present disclosure. The method 600 comprises obtaining magnetic field measurements 610 associated with at least one magnetic object 110. The magnetic field measurements are measured with a plurality of magnetometers 300. The at least one magnetic object 110 is coupled to a user-borne device 100. The method 600 further comprises determining a user-borne device location 620 based on the collected magnetic field measurements. The collected magnetic field measurements may be indicative of a magnetic field associated with the at least one magnetic object 110. The method 600 further comprises obtaining 630 user-borne device mode data indicative of predetermined operating ranges of the one or more user-borne device modes. Additionally, the method 600 comprises determining 640 a user-borne device mode based on the user-borne device location and on the user-borne device mode data. The computer-implemented method may be suitable to represent, more specifically to reproduce the user-borne device 100 as a virtual object according to one of one or more user-borne device modes on an output device 500. A manipulation of the user-borne device location during a user operation may be represented as a virtual object according to one of one or more user-borne device modes on an output device 500. The order, in which the data or measurements as described above are obtained, may vary.

The computer-implemented method 600 as described above may provide an automatic recognition of a desired user-borne device mode, for instance a currently used user-borne device type and/or a user-borne device function, based on the predetermined operating ranges and the determined user-borne device location. Furthermore, the method 600 may provide a reliable and accurate control of a representation of a user-borne device 100 according to one of one or more user-borne device modes on an output device 500.

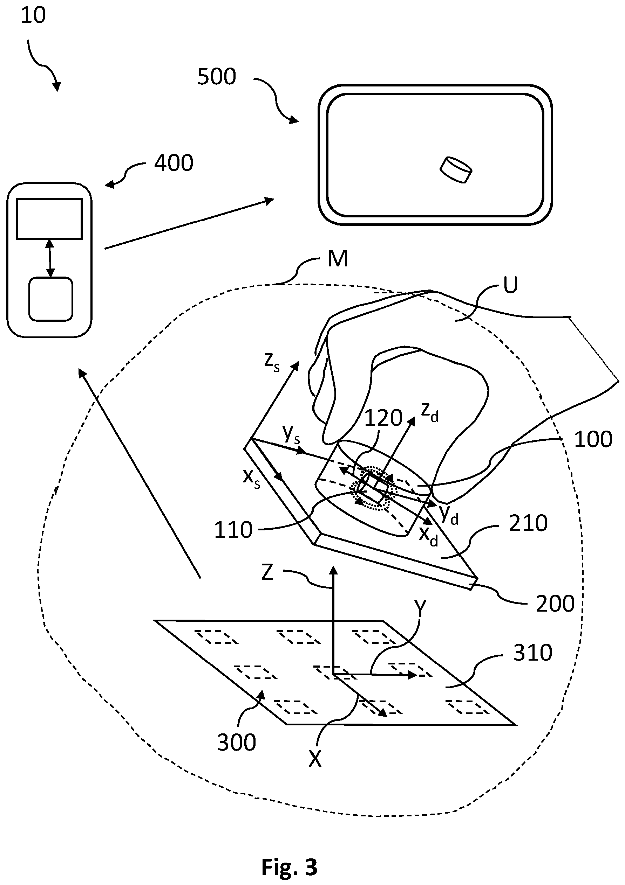

Figs. 3 to 7 schematically illustrates a system 10 for controlling a representation of a user-borne device 100 according to one of one or more user-borne device modes on an output device 500 according to the second aspect of the present disclosure. The system 10 comprises a user-borne device 100 comprising at least one magnetic object 110. The system 10 further comprises a plurality of magnetometers 300 configured to perform magnetic field measurements associated with the at least one magnetic object 110, and an output device 500. The system 10 is configured to execute a computer-implemented method 600 according to the first aspect as described herein.

In embodiments, a user-borne device mode may be indicative of a specific user-borne device type. In embodiments, a user-borne device mode may be indicative of a specific user-borne device function. In some embodiments, a user-borne device mode may be indicative of a specific user-borne device type and a specific user-borne device function. In embodiments, a specific user-borne device type may be indicative of one of a computer mouse, a keyboard, a toy, a stylus, or a dial, a brush, a finger ring. In embodiments, a specific user-borne device function may be indicative of a default function or one or more adapted functions. A default function may be a function of intended use. For instance a default function of a stylus may be writing. An adapted function of a stylus may be for instance erasing which may be determined by another predetermined operating range.

The plurality of magnetometers 300 may be configured to create a sensing volume M (as indicated, e.g., in Fig. 3).. The plurality of magnetometers 300 may be associated with a magnetometer plane 310. More specifically, the magnetometer plane 310 may be defined by a plane that may extend through a majority of the plurality of magnetometers 300. In embodiments, the plurality of magnetometers 300 may be integrated in a wall, a furniture, a notebook, an electronics device, a screen or display, keyboard and/or a mouse pad.

The method 600 may comprise defining a reference coordinate system XYZ relative to the plurality of magnetometers 300 (see, e.g., Figs. 3 to 7). The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 300. In embodiments, the first reference axis X and the second reference axis Y may be defined on the magnetometer plane 310. In this case, the vertical reference axis Z may be orthogonal to the magnetometer plane 310.

In embodiments, the user-borne device 100 may be operable within the sensing volume M. Specifically, the user-borne device 100 may be operable on or above an interaction surface 210. More specifically, the interaction surface 210 may be defined within the sensing volume M. The interaction surface 210 may be understood as physical constraints related to the plurality of magnetometers 300. For instance, the interaction surface 210 may defined with respect to the plurality of magnetometers 300 and/or the reference coordinate system XYZ by a first set of geometric parameters. More specifically, the first set of geometric parameters may be indicative of a geometry of the interaction surface 210. The first set of geometric parameters may include a point on the interaction surface 210 and a normal vector (thereby defining an infinite surface), at least three coplanar points defining a finite surface, a center point, a radius and a normal vector in case of a disk-shaped surface, and/or two axes defined on the surface (e.g., two dimensions may define a rectangular surface). The interaction surface configuration as described above may be based on the first set of geometric parameters. The interaction surface 210 may comprise a set of partial surfaces with different orientations and/or positions to each other. The computer-implemented method 600 may determine the interaction surface 210 based on the first set of geometric parameters. This allows to determine a user-borne device location on any surface, even complex surfaces (e.g., by polygonal shapes of the surfaces, curved surfaces). The first set of geometric parameters may comprise predefined geometric parameters associated with the interaction surface 210.

In embodiments, the system 10 may comprise an interaction support 200 having an interaction support surface (see, Figs. 3 to 7). The interaction surface 210 may be at least a partial surface of the interaction support surface. The interaction support 200 may not comprise ferromagnetic properties, e.g., ferromagnetic particles. In embodiments, the interaction support 200 may be a furniture (e.g., a table), a notebook, an electronics device, a screen or display, a plate, a wall, or a mouse pad. The interaction surface 210 may be defined based on the first set of geometric parameters associated with the interaction support 200. More specifically, the type of interaction support 200 may be known, e.g., a notebook or mouse pad. Such an interaction support 200 may be defined by a set of predefined geometric parameters. A partial surface of the interaction support surface may be used as interaction surface 210. Thus, the set of predefined parameters may include data, more specifically geometric data, associated with an interaction surface configuration of the interaction surface 210. As an example, these parameters may be indicative of a position and/or orientation of the interaction surface 210 relative to the reference coordinate system XYZ. In embodiments, the first set of geometric parameters may be determined by interaction surface recognition, which is described below. In embodiments, the user-borne device 100 may be a computer mouse, a keyboard, a toy, a stylus, or a dial. In embodiments, the user-borne device 100 may be an accessory tool, e.g., a ruler. In embodiments, the plurality of magnetometers 300 may be arranged in the interaction support 200 or may be attached to the interaction support 200.

As outlined above, the interaction support 200 may comprise an interaction support surface. The interaction surface 210 may be at least a partial surface of the interaction support surface. Defining the interaction surface 210 may comprise receiving input data, more specifically from a database, regarding a specific type of an interaction support 200 on which the interaction surface 210 is defined. The specific type of interaction support 200 may comprise predefined geometric parameters associated with the interaction support 200. The specific predefined geometric parameters may be stored in a database associated the type of interaction support 200 with geometric parameters. In embodiments, receiving input data may comprise instructing a user to select an interaction support 200 to be used together with the user-borne device 100. In other embodiments, receiving input data may comprise deriving a set of geometric parameters associated with the interaction surface 210 from a database.

In embodiments, the first set of geometric parameters may be determined based on an interaction surface recognition. The interaction surface recognition may be a calibration procedure or an automatic recognition procedure. As an example, for calibration, the computer-implemented method 600 may instruct a user via a user interface to dispose the user-borne device 100 on at least three different points on the interaction surface 210, wherein the at least three points may not be aligned (in particular the three points may form an equilateral triangle). Based on these points, the computer-implemented method 600 may compute a normal of the interaction surface 210. More specifically, an interaction surface position and/or an interaction surface orientation may be determined by computing the average of the at least three points. Automatic recognition procedure may be based on automatic calculation of the first set of geometric parameters based on a normal vector or on a set of normal vectors.

The method 600 may comprise defining an interaction surface coordinate system xₛyₛzₛ relative to interaction surface 210 (see, e.g., Figs. 3 to 7). The interaction surface coordinate system xₛyₛzₛ may comprise a first interaction surface axis xₛ, a second interaction surface axis yₛ and a vertical interaction surface axis zₛ. The first interaction surface axis xₛ and the second interaction surface axis yₛ may be orthogonal to each other and may define the interaction surface 210. The vertical interaction surface axis zₛ may be orthogonal to the first interaction surface axis xₛ and second interaction surface axis yₛ. In other words, the vertical interaction surface axis zₛ may be orthogonal to the interaction surface 210.

The user-borne device 100 may be electrically passive and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100.

The term "magnetic object" may refer to an object which may comprise components made of magnetic material, i.e., a material that has magnetic properties measurable by the plurality of magnetometers 300. The user-borne device 100 and/or the at least one magnetic object 110 may be mobile, i.e., freely movable within the reference coordinate system XYZ. In other words, during a user operation (i.e., an operation wherein the user-borne device 100 and/or the at least one magnetic object 110 is operated by a user), the location of the user-borne device 100 within the sensing volume M and/or relative to an interaction surface 210 may be manipulated by a user within the sensing volume M.

The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

In some embodiments, the at least one magnetic object 110 may comprise one or more coils, specifically electromagnetic coils. In such cases, the user-borne device 100 may be electrically and/or electronically active.

In some embodiments, the user-borne device 100 may comprise an RFID tag, e.g. an RFID transponder (RFID: radio-frequency identification). The system 10 may correspondingly comprise an RFID reader, e.g. an RFID emitter-receiver unit, configured to detect the RFID tag. The combination of RFID tag and RFID reader may be denoted RFID system.

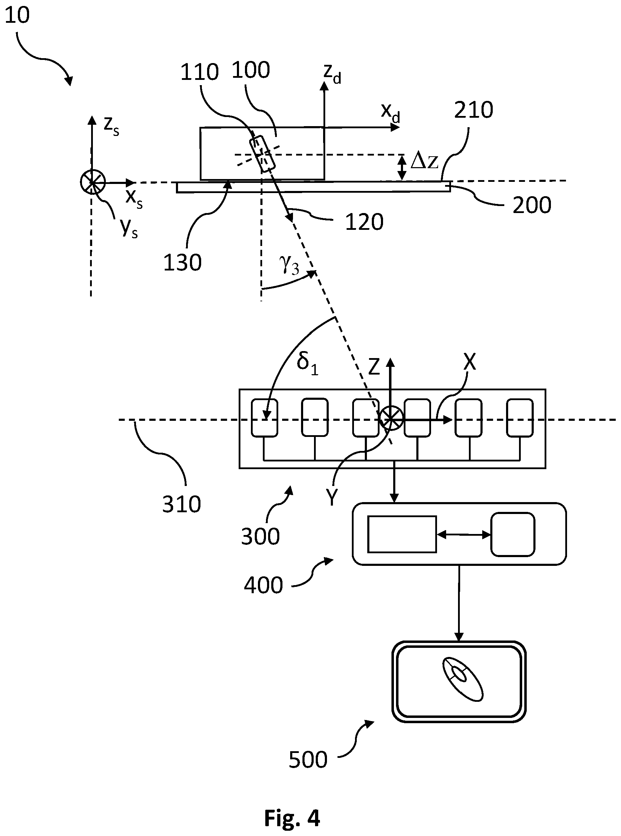

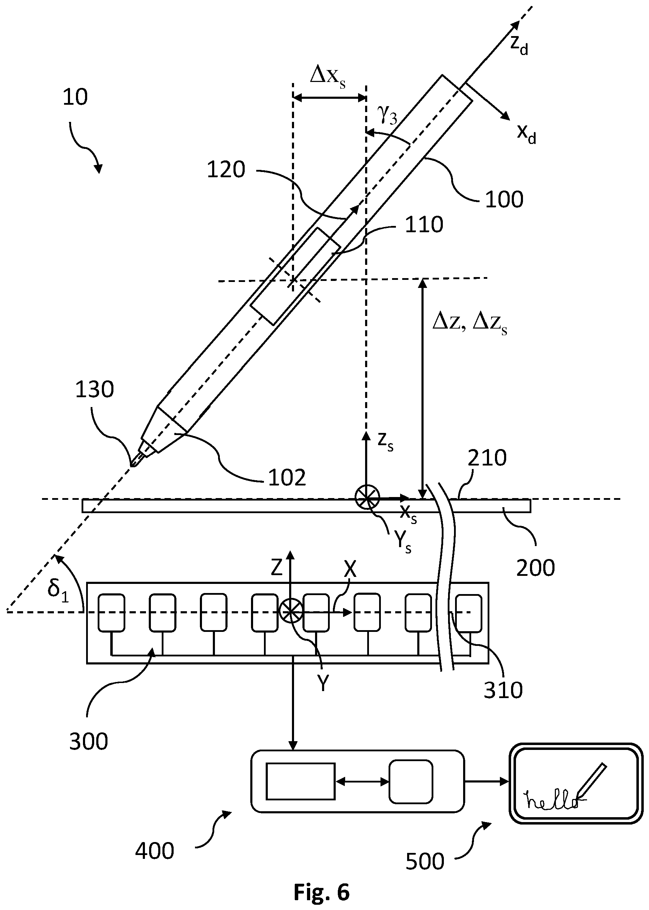

The method 600 may further comprise defining a user-borne device coordinate system (see, e.g., Figs. 3 to 7). The device coordinate system may comprise a first device axis x_{d}, a second device axis y_{d} orthogonal to the first device axis x_{d}, and a vertical device axis z_{d}. The vertical device axis z_{d} may be orthogonal to a device contact surface or point 130 and/or orthogonal to a plane defined by the first device axis x_{d} and the second device axis y_{d}. The device contact surface or point 130 may be the part of the user-borne device 100 which, during a user operation, may be in contact with the interaction surface 210. In the examples shown, e.g., in Figs. 3 or 4, the user-borne device 100 may comprise a contact surface 130 contacting an interaction surface 210. In other examples, the user-borne device 100 may comprise a contact point 130 (e.g., a stylus or other writing device comprising a writing tip which contacts an interaction surface 210 during a writing operation as shown in Fig. 6). In some embodiments, the device coordinate system may be defined within a geometric center of the user-borne device 100 (see, e.g. Fig. 3). Alternatively, to the cartesian device coordinate system, the device coordinate system may be described as a cylinder coordinate system or a spherical coordinate system.

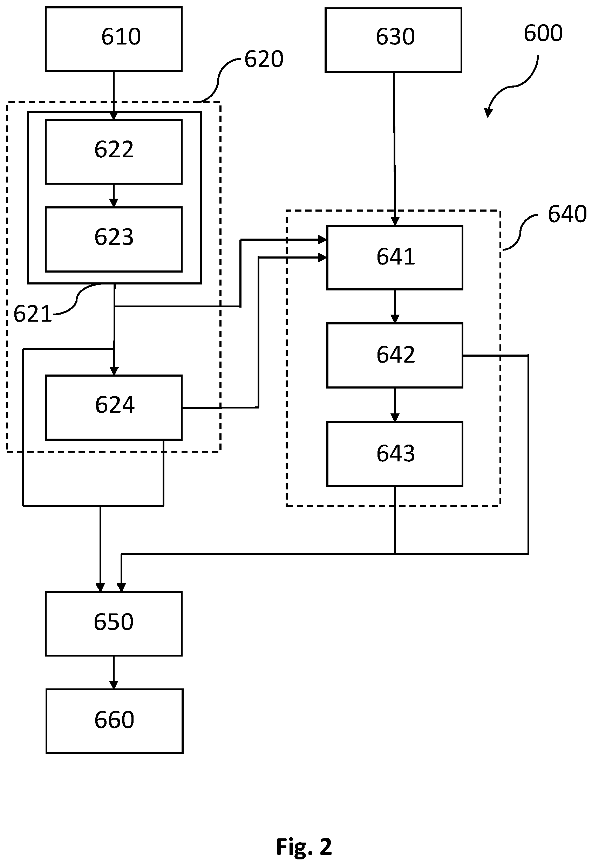

Fig. 2 schematically illustrates the computer-implemented method 600 in more detail. Determining 620 a user-borne device location may comprise determining 621, 624 a magnetic object location of the at least one magnetic object 110 which is indicative of the user-borne device location. Specifically, determining 620 a user-borne device location may comprise determining 621, 624 a position vector indicative of a magnetic object position and/or determining 621, 624 a magnetic moment vector 120 indicative of a magnetic object orientation of the at least one magnetic object 110. Because the magnetic object 110 is coupled to the user-borne device 100, the location of the magnetic object 110 may indicate the location of the user-borne device 100.

The user-borne device location may be indicative of an absolute user-borne device location with respect to the magnetometer plane 310, specifically the reference coordinate system XYZ, and/or a relative user-borne device location with respect to the interaction surface 210. Determining 620 a user-borne device location indicative of an absolute user-borne device location may comprise determining 621 an absolute magnetic object location. The absolute magnetic object location may be indicative of an absolute magnetic object position and/or an absolute magnetic object orientation of the at least one magnetic object 110 relative to the reference coordinate system XYZ. Specifically, the absolute magnetic object location may be determined based on the obtained magnetic field measurements. Thereby, the absolute position and/or absolute orientation of the at least one magnetic object 110 in the reference coordinate system XYZ can be determined.

In embodiments, determining 621 an absolute magnetic object location may comprise generating 622 magnetic field measurement data based on the obtained magnetic field measurements (see, Fig. 2). The magnetic field measurement data may be indicative of a magnetic field position, a magnetic field orientation and/or a magnetic field strength of the magnetic object 110 relative to the reference coordinate system XYZ. Determining 621 an absolute magnetic object location may further comprise processing 623 magnetic field measurement data to relate magnetic field measurement data to an absolute magnetic object location. For instance, a filter and/or an estimation algorithm may be used to evaluate the absolute magnetic object location related to the magnetic field measurement data.

The absolute magnetic object location may include a magnetic moment vector 120 and/or an absolute position vector associated with the at least one magnetic object 110. The magnetic moment vector 120 may be indicative of a magnetic object orientation. The absolute position vector may be indicative of a magnetic object position with respect to the reference coordinate system XYZ. In embodiments, the absolute magnetic object orientation may be defined by a first set of magnetic object inclination angles δ₁, δ₂, δ₃ measured between the magnetometer plane 310 and the magnetic moment vector 120. The first set of magnetic object orientation angles δ₁, δ₂, δ₃ may be measured relative to the reference coordinate axes X, Y, Z, more specifically between the magnetic moment vector 120 and the respective axes X, Y, Z of the reference coordinate system XYZ. For example, as shown in Figs. 4 to 7, the first magnetic object orientation angle δ₁ may be defined between the first reference axis X and the magnetic moment vector 120, more specifically in the XZ-plane. In embodiments, two angles with respect to the magnetometer plane 310 may be sufficient to define the absolute magnetic object orientation of the magnetic object 110. Specifically when a magnetic dipole model is used, two angles with respect to the magnetometer plane 310 may be sufficient to define the absolute magnetic object orientation of the magnetic object 110. More specifically, when the magnetic object 110 is symmetrical along the magnetization axis, i.e. rotationally symmetric magnetized, two angles with respect to the magnetometer plane 310 may be sufficient to define the absolute magnetic object orientation of the magnetic object 110. In some embodiments, absolute position vector may be defined by a first set of cartesian coordinates defined within the reference coordinate system XYZ. The magnetic moment vector 120 and/or the absolute position vector may be determined based on an implementation of a mathematical model associating each measurement of a magnetometer of the plurality of magnetometers 300 with a location of the at least one magnetic object 110 in the reference coordinate system XYZ. The model may be typically constructed from physical equations of electromagnetism, more specifically equations of magnetostatics. To establish this model, the at least one magnetic object 110 may be approximated by a magnetic dipole. Each magnetometer of the plurality of magnetometers 300 may be a vector magnetometer and may be configured to measure the magnetic field in one, two or three dimensions.

Referring again to Fig. 2, determining 620 a user-borne device location indicative of a relative user-borne device location may comprises determining 624 a relative magnetic object location. The relative magnetic object location may be indicative of a relative magnetic object position and/or a relative magnetic object orientation. The relative magnetic object position may be a position of the at least one magnetic object 110 with respect to the interaction surface 210, more specifically to the interaction surface coordinate system xₛ, yₛ, zₛ. The relative magnetic object orientation may be an orientation of the at least one magnetic object 110 with respect to the interaction surface 210, more specifically to the interaction surface coordinate system xₛyₛzₛ.

The relative magnetic object location may include a magnetic moment vector 120 and/or a relative position vector Δxₛ, Δyₛ, Δzₛ associated with the at least one magnetic object 110. The magnetic moment vector 120 may be indicative of a relative magnetic object orientation and/or wherein the relative position vector Δxₛ, Δyₛ, Δzₛ is indicative of a relative magnetic object position with respect to the interaction surface coordinate system xₛ, yₛ, zₛ. In embodiments, the relative position vector may be understood as a vector from the origin of the surface coordinate system xₛyₛzₛ to the center of mass or dipole center of the magnetic object 110. In embodiments, the relative magnetic object orientation may be defined by a second set of magnetic object inclination angles γ₁, γ₂, γ₃ determined between the interaction surface 210 and the magnetic moment vector 120. In other words, the relative magnetic object orientation may be defined by a set of magnetic object inclination angles γ₁, γ₂, γ₃ relative to the interaction surface coordinate axes xₛ, yₛ, zₛ. Specifically, a first magnetic object inclination angle γ₁ may be determined between the first interaction surface axis xₛ and the magnetic moment vector 120. A second magnetic object inclination angle γ₂ may be determined between second interaction surface axis yₛ and the magnetic moment vector 120. A vertical magnetic object inclination angle γ₃ may be determined between vertical interaction surface axis zₛ and the magnetic moment vector 120. For example, as shown in Figs. 4 to 7, the vertical magnetic object inclination angle γ₃ may be defined between the vertical interaction surface axis zₛ and the magnetic moment vector 120. Specifically, the vertical magnetic object inclination angle γ₃ may be defined between the magnetic moment vector 120 and the vertical interaction surface axis zₛ or an axis parallel thereto such that the vertical magnetic object inclination angle γ₃ can only range between 0° and 90° (see, e.g. Figs. 4 to 7). In embodiments, two angles with respect to the magnetometer plane 310 may be sufficient to define the absolute magnetic object orientation of the magnetic object 110.

In embodiments, determining 624 a relative magnetic object location may be based on the absolute magnetic object location and the first set of geometric parameters. Specifically, based on the determined absolute location of the at least one magnetic object 110 and the knowledge of the arrangement of the interaction surface 210 with respect to the reference coordinate system XYZ, the relative magnetic object location can be determined. In embodiments, the first set of geometric parameters comprises predefined transformation parameters indicative of a transformation of the reference coordinate system XYZ to the interaction surface coordinate system xₛyₛzₛ. In other words and as outlined above, the first set geometric parameters comprises predefined geometric parameters which transform the reference coordinate system XYZ to the interaction surface coordinate system xₛyₛzₛ. Further, alternatively described, the first set geometric parameters may transform the absolute magnetic object location into the relative magnetic object location. Specifically, an absolute magnetic object position and/or an absolute magnetic object orientation may be transformed into a relative magnetic object position and/or a relative magnetic object orientation.

As outlined above, the method 600 comprises obtaining 630 user-borne device mode data indicative of predetermined operating ranges of the one or more user-borne device modes. Specifically, the user-borne device mode data may comprise a plurality of predetermined operating ranges of the one or more user-borne device modes. In embodiments, the user-borne device mode data may be obtained from a database and/or from a user input. Each predetermined operating range may be associated to one of the one or more user-borne device modes. Specifically, each of the plurality predetermined operating ranges may be associated to only one or one specific of the one or more user-borne device modes.

In embodiments, a predetermined operating range may define a predetermined range of user-borne device locations associated to one of the one or more user-borne device modes. In specific embodiments, a predetermined operating range may define one or more specific predetermined user-borne device locations associated to one of the one or more user-borne device mode. For instance, a predetermined operating range may define one typical user-borne device location associated to one of the one or more user-borne device modes.

In embodiments, a predetermined range of user-borne device locations may comprise a predetermined range of absolute user-borne device locations and/or a predetermined range of relative user-borne device locations. In embodiments, a predetermined operating range may comprise a predetermined orientation interval indicative of magnetic object orientations and/or a predetermined position interval indicative of magnetic object positions. In some embodiments, the shape of a user-borne device 100 may drive the definition of the predetermined operating range.

In embodiments, the predetermined orientation interval may comprise an interval of at least one magnetic object inclination angle of the first set of magnetic object inclination angles δ₁, δ₂, δ₃. In embodiments, the predetermined orientation interval may comprise an interval of at least one magnetic object inclination angle of the second set of magnetic object inclination angles γ₁, γ₂, γ₃.

In embodiments, the predetermined position interval may comprise an interval of an operating distance Δz defined by the z-component of the position vector. In embodiments, the predetermined position interval may comprise an interval of an operating area ΔxΔy defined the x-component and/or y-component of the position vector. Specifically, the operating distance Δz may be defined by the z-component of the absolute position vector and/or by the z-component of the relative position vector. In embodiments, the predetermined position interval may comprise one or more of an operating area and/or an operating distance. The operating area may be an x-y area relative to the interaction surface coordinate system xₛ, yₛ, zₛ and/or relative to the reference coordinate system XYZ. In embodiments, the predetermined position interval may comprise an interval of one or more components of the position vector, more specifically of the absolute position vector or the relative position vector.

In some embodiments, the predetermined operating range may comprise RFID data associated with user-borne device modes.

In embodiments, the predetermined operating ranges may be mutually exclusive.

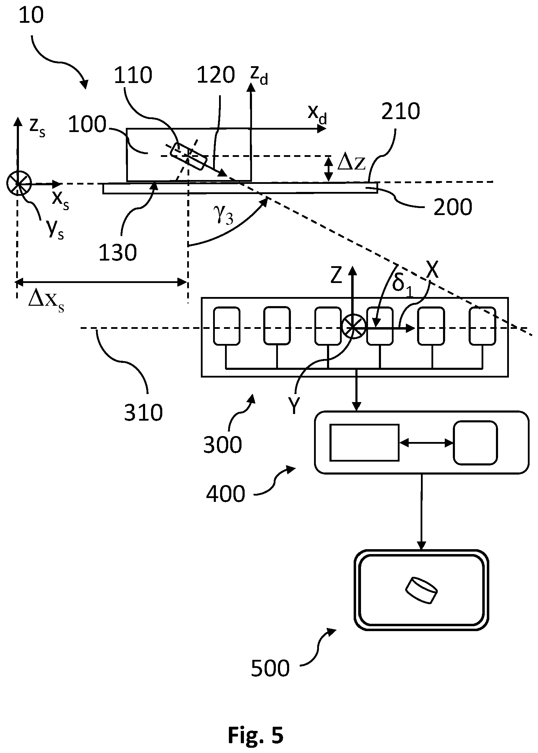

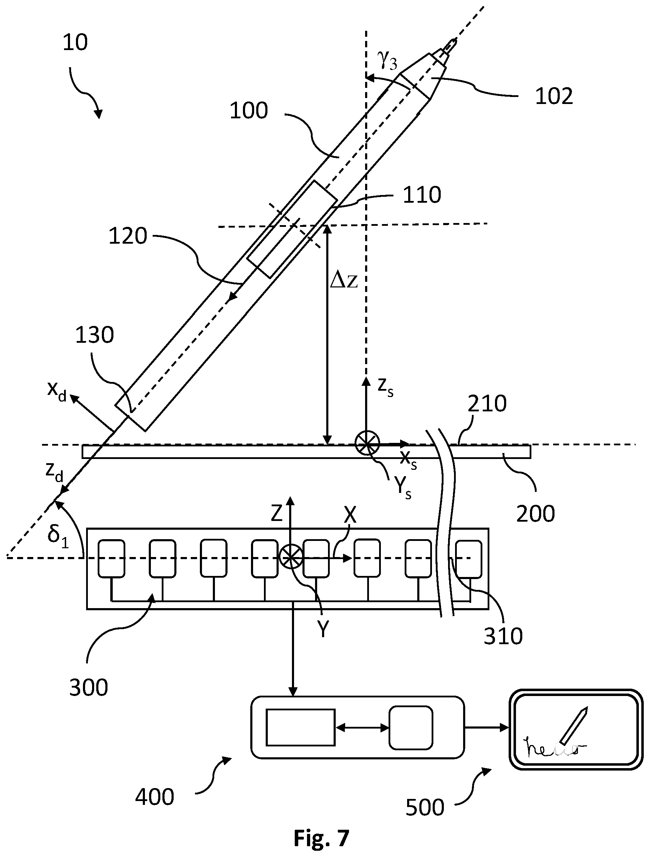

In the following some examples of predetermined operating ranges and user-borne device modes are described. In embodiments, the user-borne device mode data may comprise a first predetermined operating range associated with a first user-borne device mode (see, Fig. 4). The user-borne device mode data may comprise a second predetermined operating range associated with a second user-borne device mode (see, Fig. 5). The user-borne device mode data may comprise a third predetermined operating range associated with a third user-borne device mode (see, Fig. 6). Additionally, user-borne device mode data may comprise a fourth predetermined operating range associated with a fourth user-borne device mode (see, Fig. 7).

The first predetermined operating range may comprise a predetermined orientation interval being restricted to magnetic object orientations, wherein the magnetic moment vector 120 is directed away from the interaction surface 210. Furthermore, the magnetic moment vector 120 may be oriented within a first angle interval γ_{3,1,min} to γ_{3,1,max} of the vertical magnetic object inclination angle γ₃. As outlined above, the vertical magnetic object inclination angle γ₃ is defined with respect to the vertical interaction surface axis zₛ which is orthogonally to the interaction surface 210. As further outlined above, the vertical magnetic object inclination angle γ₃ is defined such that it can range between 0° and 90°. In embodiments, the first angle interval may be restricted to γ_{3,1,max} ≤ 75° with respect to the vertical interaction surface axis zₛ. In embodiments, the first angle interval may be restricted to γ_{3,1,max} ≤ 60°. In embodiments, the first angle interval may be restricted to γ_{3,1,max} ≤ 45°. In embodiments, γ_{3,1,min} may be 0°. Exemplary, this first user-borne device mode may be related to the user-borne device type of a computer mouse (see, Fig. 4).

The second predetermined operating range comprises a predetermined orientation interval being restricted to magnetic object orientations, wherein the magnetic moment vector 120 is oriented within a second angle interval γ_{3,2,min} to γ_{3,2,max} of the vertical magnetic object inclination angle γ₃. As outlined above, the vertical magnetic object inclination angle γ₃ is defined with respect to the vertical interaction surface axis zₛ which is orthogonally to the interaction surface 210. As further outlined above, the vertical magnetic object inclination angle γ₃ is defined such that it can range between 0° and 90°. In embodiments, the lower end of the second angle interval may be γ_{3,2,min} > γ_{3,1,max}. In embodiments, the second angle interval may be restricted to γ_{3,2,min} >80° with respect to the vertical interaction surface axis zₛ. In embodiments of the predetermined orientation interval of the second predetermined operating range, the magnetic moment vector 120 may be directed away from or towards the interaction surface 210. Exemplary, this second user-borne device mode may be related to the user-borne device type of a dial (see, Fig. 5).

The third predetermined operating range comprises a predetermined orientation interval being restricted to magnetic object orientations, wherein the magnetic moment vector 120 is directed towards the interaction surface 210. Furthermore, the magnetic moment vector 120 is oriented within a third angle interval γ_{3,3,min} to γ_{3,3,max} of the vertical magnetic object inclination angle γ₃. As outlined above, the vertical magnetic object inclination angle γ₃ is defined with respect to the vertical interaction surface axis zₛ which is orthogonally to the interaction surface 210. As further outlined above, the vertical magnetic object inclination angle γ₃ is defined such that it can range between 0° and 90°. In embodiments, the upper end of the third angle interval may be γ_{3,3,max} < γ_{3,2,min}. In embodiments, the third angle interval may be restricted to γ_{3,3,max} ≤ 75° with respect to the vertical interaction surface axis zₛ. Exemplary, this third user-borne device mode may be related to the user-borne device type of a stylus (see, Fig. 6).

In embodiments, one or more of the first, second and third predetermined operating ranges may, additionally or alternatively to one or more of the requirements of the above mentioned predetermined orientation intervals, comprise one or more predetermined position intervals. For instance, the first and/or the second predetermined operating ranges may comprise a predetermined position interval being restricted to magnetic object positions wherein the operating distance Δz is ≤2cm (see, e.g. Figs. 3 and 4). For instance, the third predetermined operating range may comprise a predetermined position interval being restricted to magnetic object position, wherein the operating distance Δz is ≥3cm. In some embodiments, a fourth predetermined operating range may be defined. The fourth predetermined operating range may have the same predetermined angle interval as the first predetermined operating range. Additionally, the fourth predetermined operating range may include a predetermined position interval being restricted to magnetic object position wherein the operating distance Δz is ≥3cm. Exemplary, this fourth user-borne device mode may be related to the user-borne device type of a stylus (see, Fig. 7). In addition, by distinguishing the general direction of the magnetic moment vector 120, e.g. towards the interaction surface 210 or away from the interaction surface 210, the third and the fourth user-borne device modes can be distinguished. For instance, the third user-borne device mode may further comprise a first user-borne device function, e.g. writing. For instance, the fourth user-borne device mode may further comprise a second user-borne device function, e.g. erasing.

In some embodiments, one or more of the above described predetermined operating ranges may additionally or alternatively comprise a predetermined position interval including an interval of an operating area ΔxΔy defined the x-component and/or y-component of the position vector.

Illustratively explained with the above example configurations, the computer-implemented method 600 and associated system 10 disclosed herein can automatically recognize a user-borne device type and/or a user-borne device function depending on one or more of, a predetermined angle interval, a predetermined position interval, specifically a predetermined interval of an operating area ΔxΔy defined the x-component and/or y-component of the position vector, specifically a predetermined interval of an operating distance Δz defined by the z-component of the position vector, or combinations thereof.

Again with reference to Fig. 2, determining 640 a user-borne device mode may comprise comparing 641 the obtained user-borne device mode data with the determined user-borne device location. Specifically, comparing 641 the obtained user-borne device mode data with the determined user-borne device location may comprise comparing the determined user-borne device location with the plurality of predetermined operating ranges. In embodiments, determining 640 a user-borne device mode may further comprise selecting 642 a user-borne device mode based on the comparison. In embodiments, selecting 642 a user-borne device mode may comprise excluding a compared user-borne device mode, when the determined user-borne device location does not fulfill the predetermined operating range of that compared user-borne device mode. In embodiments, selecting 642 a user-borne device mode may comprise selecting a compared user-borne device mode, when the determined user-borne device location fulfills the predetermined operating range of that compared user-borne device mode. In embodiments, selecting 642 a user-borne device mode may comprise selecting a compared user-borne device mode, when the predetermined operating range of that compared user-borne device mode is closest to the determined user-borne device location. For instance, instead of an interval, one typical value may be included in the predetermined operating ranges. A distance between the magnetic object location and the one typical value may be computed. Then the selection of the user-borne device mode is made by selecting the lowest distance to the associated predetermined operating range, e.g. difference, specifically orientation difference and/or position difference.

In embodiments, determining 620 a user-borne device location based on the collected magnetic field measurements is performed over a time period. Specifically, obtaining 610 magnetic field measurements may be performed over the time period. The time period may comprise multiple time samples at which magnetic field measurements are obtained and at which respective user-borne device locations, more specifically respective magnetic object locations, are determined. Thereby a movement of the user-borne device 100, more specifically a movement of the at least one magnetic object 110, can be tracked. In embodiments, the time period may start when a user-borne device 100, specifically the magnetic object 110 associated therewith, is detected within the sensing volume M. In embodiments, which include an RFID system, the time period may start when the user-borne device 100 which includes the magnetic object 110 is detected close to the RFID reader. The term "close" may be understood as a distance from the RFID reader whithin which distance the RFID reader can detect the RFID tag. Using an RFID system in combination with the magnetic object 110 can lead to a reduction in power consumption. In embodiments, the RFID system, specficially the RFID reader, may be only active when the user-borne device 100 is close to the RFID reader. In embodiments, the time period may end when a user-borne device 100, specifically the magnetic object 110 associated therewith, is not detected any more within the sensing volume M.

In embodiments, determining 640 a user-borne device mode may be performed within the time period. Specifically, determining 640 a user-borne device mode may comprise storing 643 the determined user-borne device mode on a memory (see, e.g. Fig. 2).The time period may comprise a mode recognition time phase. In embodiments, the user-borne device mode may be determined and stored during the mode recognition time phase. Specifically, the user-borne device mode may be determined and stored only during the mode recognition time phase. In embodiments, the mode recognition time phase may start at the same instant as the time period. In embodiments, the mode recognition time phase may start upon determining a predetermined start trigger user-borne device location. The start trigger user-borne device location may be understood as a user-borne device location which triggers the start of the mode recognition time phase. For instance, the start trigger user-borne device location may comprise a predetermined distance from the interaction surface 210, specifically a distance along the vertical surface axis zₛ. In embodiments, the mode recognition time phase may start upon lapse of a predetermined time interval after the time period starts.

In embodiments, an end of the mode recognition time phase may be triggered by one or more of upon lapse of a predetermined time interval, upon determination of a user-borne device mode, upon storing the determined user-borne device mode on a memory, upon determining that a distance, specifically one or more components of a position vector exceeds a predetermined threshold, and/or upon lapse of the time period. In embodiments, determining 640 a user-borne device mode is stopped when the mode recognition time phase ends. The mode recognition time phase enables to clearly distinguish between different user-borne device modes whilst at the same time enabling a larger operating range of a user-borne device once the different user-borne device mode is determined.

Again with reference to Figs. 1 and 2, the computer-implemented method 600 may further comprise representing 650 the user-borne device 100 on an output device 500. The method 600 may further comprise controlling 660 the representation of the user-borne device 100 according to the determined user-borne device mode. In embodiments, the output device 500 may comprise one or more of a display, a screen, a light, a domotic peripheral, a laptop, a smartphone, a tablet, or a control panel. For instance, a control panel may be provided in which depending on the determined user-borne device mode different peripherals such as a gate, a light, a heat system and/or a shutter may be controlled.

It should be noted that the computer-implemented method 600 and the associated system 10 may be configured to determine user-borne device locations and/or track a manipulation of more than one user-borne device 100 at the same time. The computer-implemented method 600 and the associated system 10 may also be configured to determine a user-borne device mode for each of the more than one user-borne device 100.

In embodiments, the system 10 may comprise a processing unit 400 or may be connectable to an external processing unit. The processing unit 400 may be configured to execute the computer-implemented method 600 as described herein. In embodiments, the system 10 may comprise an electronics device. In embodiments, the processing unit 400 may be integrated in the electronics device. In embodiments, the output device 500 may be integrated in the electronics device. In embodiments, the electronics device may be a tablet, a cell phone, a laptop, a computer, a virtual reality (VR) set or a television.

In embodiments, the electronics device may be a VR set, more specifically an XR headset which may be a device worn on a user's head and configured to allow a user to experience virtual environments in real life (virtual reality environment, or VR environment). In embodiments, the user-borne device 100 may be reproduced as a virtual object in the virtual environment. In an embodiment, the user-borne device 100 may be displayed or reproduced as a virtual object in the VR environment allowing the user U to recognize where the user-borne device is located. A plurality of magnetometers 300 may be provided creating a sensing volume in which the user-borne device 100 is operated. A user-borne device location may be indicative of an orientation and/or a position of the user borne device 100 relative to the reference coordinate system XYZ, more specifically to the plurality of magnetometers 300. The reference coordinate system XYZ may be fixed in the VR environment. A position and/or orientation of the user-borne device 100 may be computed relative to the VR set, more specifically to the XR headset, and may be computed, particularly displayed to the user via the XR headset. In embodiments, the reference coordinate system XYZ may be dynamically evaluated from a tracking of the environment by the XR headset. Specifically, the interaction surface 210 and/or the interaction surface coordinate system may be dynamically evaluated from a tracking of the environment by the XR headset. In embodiments, it may also be possible to provide an additional tracking system being fixed to the plurality of magnetometer 300 such as IR tracking, electromagnetic tracking, or camera based tracking. Scroll event and/or click event may be generally denoted as a trigger event and the caused action may also be represented in the VR environment more specifically may be displayed to a user U via a display arranged in the XR headset. The representation in the VR environment may be done by changing a rendering parameter of the user-borne device 100, for instance color or light, and/or adding a specific sound. In some embodiments, the interaction surface 210 may be modeled in the VR environment, displayed to a user via the XR headset and/or used as an input to represent an interaction between the user-borne device 100 and the interaction surface 210 within the VR environment (e.g., representing the user-borne device 100 being operated on the interaction surface 210 within the VR environment). Specifically, the control of the user-borne device 100 may be computed and/or displayed to the user according to the determined user-borne device mode via the XR headset. In some embodiments, the one or more output devices 500 may be represented as virtual displays or screens in the VR environment. In embodiments, the XR headset may be configured to evaluate a shape of the user-borne device 100 by merging data on user-borne device locations and camera input tracked by a camera to dynamically create the shape of the user-borne device 100. Based on a comparison of the created shaped with predefined shapes of user-borne devices 100, a user-borne device type and mode can be recognized or identified.

Referring to Fig. 3, an arrangement of the plurality of magnetometers with respect to the interaction surface 210 defined on an interaction support 200 is shown. In the embodiment shown in Fig. 3, the plurality of magnetometers 300 may be arranged in rows and columns. However, it is also possible that the plurality of magnetometers may be arranged in an unordered manner within a magnetometer body. A calibration procedure may be used to determine the exact locations and measurement axes of each magnetometer within the magnetometer body relative to the reference coordinate system XYZ. The plurality of magnetometers 300 are shown in Fig. 3 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

The plurality of magnetometers 300 may be electrically (e.g., via wires or a data bus) or wirelessly connected to the processing unit 400, the external processing unit and/or to the electronics device. In embodiments, the plurality of magnetometers 300 may be integrated in a wall, a furniture, a notebook, an electronics device, a screen, a keyboard and/or a mouse pad. In case the plurality of magnetometers 300 is arranged in a wall, the interaction surface 210 may be a screen or display placed in front of the plurality of magnetometers 300. In embodiments, the interaction surface 210 may be defined on the one or more output devices 500.

According to an aspect of the present disclosure, a computer system may be configured to execute the computer-implemented method 600 as described herein. According to another aspect of the present disclosure a computer program may be configured to execute the computer-implemented method 600 as described herein. Furthermore, a computer-readable medium or signal storing the computer program may be provided.

In embodiments (not shown in the figures), the user-borne device 100 may comprise at least one manipulation feature, more specifically coupled to a housing of the user-borne device. The at least one manipulation feature may be translatable and/or rotatable with respect to the user-borne device 100, more specifically to the housing. The at least one magnetic object 110 may be coupled to the at least one manipulation feature. More specifically, the at least one magnetic object 110 may be operationally, e.g., mechanically, coupled to the at least one manipulation feature 140. A translation and/or rotation of the at least one manipulation feature relative to the housing may cause a translation and/or a rotation of the at least one magnetic object 110 relative to the housing. The at least one manipulation feature may be actuated by a user. In an initial state of the user-borne device 100, the at least one manipulation feature and/or the at least one magnetic object 110 may be in the initial location. In an actuated state of the user-borne device 100, the at least one manipulation feature and/or the at least one magnetic object 110 may be in the actuated location. In other words, in case the at least one manipulation feature is not actuated by user, the user-borne device may be in the initial state. More specifically, in the initial state, the at least one manipulation feature and/or the at least one magnetic object 110 may be in the initial location. In case the at least one manipulation feature is actuated by user, the user-borne device 100 may be in the actuated state. More specifically, in the actuated state, the at least one manipulation feature and/or the at least one magnetic object 110 may be in the actuated location. In embodiments, the user-borne device 100 may comprise a biasing element (not shown), configured to urge the at least one manipulation feature and/or at least one magnetic object 110 from the actuated location to the initial location, more specifically when the at least one manipulation feature is not actuated. More specifically, when a user actuates (e.g., applies a force on) the at least one manipulation feature, the at least one manipulation feature and at least one magnetic object 110 may be moved from the initial location to the actuated location. In this case, the biasing element may be biased. When a user releases the force on the at least one manipulation feature, the at least one manipulation feature and the at least one magnetic object may be urged from the actuated location to the initial location.

In embodiments, the at least one manipulation feature may be associated with at least one trigger event. The system 10 may be configured to determine the respective trigger event based on a translation and/or rotation of the at least one magnetic object 110 relative to the user-borne device 100, more specifically caused by a translation and/or rotation of the at least one manipulation feature being operationally coupled to the at least one magnetic object 110. More specifically, the system 10 may be configured to determine a position and/or rotation deviation between the initial location and the actuated location. In other words, a specific translation and/or rotation of the at least one magnetic object 110 relative to the user-borne device 100 may be detectable by the system 10. Based on the detected specific translation and/or rotation, the system 10 may be configured to transform this movement to a trigger event associated with the translation and/or rotation. In an example, the system 10 may be coupled to a database. The database may comprise data associating at least one trigger event with a specific translation and/or rotation of the at least one magnetic object 110 from the initial location to the actuated location. The system 10 may be configured to transmit to and/or receive data from the database. Specific translational movements and/or rotational movements of the at least one magnetic object 110 may be associated with specific trigger events. The respective trigger event may be, e.g., a click event, a scroll event, and/or a selection event. In case a plurality of magnetic objects is provided, additional trigger events may be determined based on a rotation and/or translation of the magnetic objects relative to each other and detectable by the system 10. The at least one trigger event may be initiated by a user manipulation of the user-borne device 100 within the sensing volume M. The at least one trigger event may cause an action and/or may be used to control an action in a digital environment (i.e., an environment which is controlled by a computer or a network of computers), e.g., a virtual environment, based on a user input. More specifically, the at least one trigger event may implement a user input on the user-borne device as an action in the digital environment. For instance, the at least one user-borne device 100 may be used together with an electronics device, e.g., a tablet, a cell phone, a laptop, a computer, a virtual reality (VR) set or a television. The at least one trigger event may cause an action on the electronics device and/or may be used to control an action on the electronics device 700 based on a user input on the user-borne device 100.

As mentioned above, the at least one trigger event may be a scroll event and/or a click event. A scroll event and/or a click event may be applied to various different application fields. A scroll event may trigger a scroll action in a digital environment, more specifically a virtual environment, based on a user input, e.g., "scroll up" and "scroll down" on a display. A scroll event may cause or provide a control of a rotational and/or translational movement of a virtual object in a digital environment, more specifically a virtual environment, that is associated with a user input. For instance, a scroll event may trigger a scroll action including scrolling of files or data, a rotational or translational movement of the virtual object associated with a selection of a choice from a plurality of choices. The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), which may be controlled by the user-borne device 100, a step in a direction, flipping through a menu, flipping through a selection list, or adjusting (e.g. increasing or decreasing) a parameter (e.g. a setting or a configuration). A click event may trigger a click action (more specifically of a virtual object) in a digital environment, more specifically a virtual environment, based on a user input. A click event may include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger a single click action, a double click action, a triple click action, a right click action and/or a click-and-drag action within a digital environment, more specifically a virtual environment. A single click action may refer to selection of an object within a virtual environment. A double click action may open a file or execute a program within a virtual environment. A click-and-drag action may include clicking, holding and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the click event depends on the user's input on the user-borne device 100. For example, the click event may cause a double-click action when a user provides two quick and successive inputs on the user-borne device 100. The above-mentioned features enables various new application fields for the user-borne device 100, for example a computer-mouse, a keyboard, a dial, a mouse scroll element (e.g. a wheel), ajoystick, a control for an electronic device (e.g. an audio control or a visual control), a control of software settings or visualizations (e.g. graphic software or design software), or a control of a computer game.

## Claims

1. A computer-implemented method (600) for controlling a representation of a user-borne device (100) according to one of one or more user-borne device modes on an output device (500), wherein the method comprises:
- obtaining (610) magnetic field measurements associated with at least one magnetic object (110) and measured with a plurality of magnetometers (300), wherein the at least one magnetic object (110) is coupled to the user-borne device (100),
- determining (620) a user-borne device location based on the collected magnetic field measurements,
- obtaining (630) user-borne device mode data indicative of predetermined operating ranges of the one or more user-borne device modes, wherein the user-borne device mode data comprises a plurality of predetermined operating ranges of the one or more user-borne device modes, wherein a predetermined operating range comprises a predetermined orientation interval indicative of magnetic object orientations
- determining (640) a user-borne device mode based on the user-borne device location and on the user-borne device mode data,
- representing (650) the user-borne device (100) on the output device (500), and
- controlling (660) the representation of the user-borne device (100) according to the determined user-borne device mode.

2. The computer-implemented method (600) of claim 1, wherein the user-borne device (100) is operable on an interaction surface (210), the method comprising:
defining an interaction surface coordinate system (xₛyₛzₛ) relative to interaction surface (210), the interaction surface coordinate system (xₛyₛzₛ) comprising a first interaction surface axis (xₛ), a second interaction surface axis (yₛ) and a vertical interaction surface axis (zₛ), wherein the first interaction surface axis (xₛ) and the second interaction surface axis (yₛ) are orthogonal to each other and define the interaction surface (210), and wherein the vertical interaction surface axis (zₛ) is orthogonal to the first interaction surface axis (xₛ) and second interaction surface axis (yₛ).

3. The computer-implemented method (600) of any one of the preceding claims, comprising:
defining a reference coordinate system (XYZ) relative to the plurality of magnetometers (300), the reference coordinate system (XYZ) comprising a first reference axis (X), a second reference axis (Y) and a vertical reference axis (Z), wherein the first reference axis (X) and the second reference axis (Y) are orthogonal to each other, and wherein the vertical reference axis (Z) is orthogonal to the first reference axis (X) and the second reference axis (Y) and extends through a center of the plurality of magnetometers (300), optionally wherein the first reference axis (X) and the second reference axis (Y) are defined on a magnetometer plane (310) associated with the plurality of magnetometers (300), wherein the magnetometer plane (310) is defined by a plane that extends through a majority of the plurality of magnetometers (300), and wherein the vertical reference axis (Z) is orthogonal to the magnetometer plane (310).

4. The computer-implemented method (600) of any one of the preceding claims, wherein determining (620) a user-borne device location comprises:
determining (621, 624) a magnetic object location of the at least one magnetic object (110) which is indicative of the user-borne device location, specifically determining (621, 624) a position vector indicative of a magnetic object position and/or determining (621, 624) a magnetic moment vector (120) indicative of a magnetic object orientation of the at least one magnetic object (110).

5. The computer-implemented method (600) of any one of the preceding claims, wherein the user-borne device location is indicative of an absolute user-borne device location with respect to the magnetometer plane (310) and/or a relative user-borne device location with respect to the interaction surface (210).

6. The computer-implemented method (600) of claim 5, wherein determining (620) a user-borne device location indicative of a relative user-borne device location comprises:
determining (624) a relative magnetic object location indicative of a relative magnetic object position with respect to the interaction surface (210) and/or a relative magnetic object orientation of the at least one magnetic object (110) with respect to the interaction surface (210), more specifically to the interaction surface coordinate system (xₛyₛzₛ).

7. The computer-implemented method (600) of claim 6, wherein the relative magnetic object orientation is defined by a second set of magnetic object inclination angles (γ1, γ2, γ3) determined between the interaction surface (210) and the magnetic moment vector (120).

8. The computer-implemented method (600) of any one of the preceding claims if at least dependent on claim 3, wherein a predetermined operating range defines a predetermined range of user-borne device locations associated to one of the one or more user-borne device modes, specifically, wherein a predetermined range of user-borne device locations comprises a predetermined range of absolute user-borne device locations with respect to the magnetometer plane (310), and/or a predetermined range of relative user-borne device locations with respect to interaction surface (210).

9. The computer-implemented method (600) of any one of the preceding claims, wherein the user-borne device mode data comprises a first predetermined operating range associated with a first user-borne device mode, a second predetermined operating range associated with a second user-borne device mode and a third predetermined operating range associated with a third user-borne device mode.

10. The computer-implemented method (600) of any one of the preceding claims, if at least dependent on claim 4, wherein a predetermined operating range comprises a predetermined position interval indicative of magnetic object positions, wherein the predetermined position interval comprises an interval of an operating distance (Δz) defined by the z-component of the position vector and/or an interval of an operating area (ΔxΔy) defined the x-component and/or y-component of the position vector.

11. The computer-implemented method (600) of any one of the preceding claims, wherein a user-borne device mode is indicative of specific user-borne device type and/or of a specific user-borne device function.

12. The computer-implemented method (600) of claim 11, wherein selecting (642) a user-borne device mode based on the comparison comprises:
excluding a compared user-borne device mode, when the determined user-borne device location does not fulfill the predetermined operating range of that compared user-borne device mode, and/or
selecting a compared user-borne device mode, when the determined user-borne device location fulfills the predetermined operating range of that compared user-borne device mode.

13. The computer-implemented method (600) of any one of the preceding claims, wherein determining (620) a user-borne device location based on the collected magnetic field measurements is performed over a time period, specifically wherein determining (640) a user-borne device mode is performed within the time period, and wherein determining (640) a user-borne device mode comprises:
storing (643) the determined user-borne device mode on a memory.

14. The computer-implemented method (600) of claim 13, wherein the time period comprises a mode recognition time phase during which the user-borne device mode is determined and stored, optionally wherein determining (640) a user-borne device mode is stopped when the mode recognition time phase ends.

15. A system (10) for controlling a representation of a user-borne device (100) according to one of one or more user-borne device modes on an output device (500), comprising:
the user-borne device (100) comprising at least one magnetic object (110),
a plurality of magnetometers (300) configured to perform magnetic field measurements associated with the at least one magnetic object (110), and
an output device (500),
wherein the system (10) is configured to execute a computer-implemented method (600) of any one of claims 1 to 14.

## Patentansprüche

1. Computerimplementiertes Verfahren (600) zum Steuern einer Darstellung einer benutzergetragenen Vorrichtung (100) gemäß einem oder mehreren Modi der benutzergetragenen Vorrichtung auf einer Ausgabevorrichtung (500), wobei das Verfahren umfasst:
- Erhalten (610) von Magnetfeldmessungen, die mindestens einem magnetischen Objekt (110) zugeordnet sind und mit einer Vielzahl von Magnetometern (300) gemessen werden, wobei das mindestens eine magnetische Objekt (110) mit der benutzergetragenen Vorrichtung (100) gekoppelt ist,
- Bestimmen (620) eines Standorts der benutzergetragenen Vorrichtung basierend auf den erfassten Magnetfeldmessungen,
- Erhalten (630) von Daten eines Modus der benutzergetragenen Vorrichtung, die zuvor bestimmte Betriebsbereiche des einen oder der mehreren Modi der benutzergetragenen Vorrichtung angeben, wobei die Daten des Modus der benutzergetragenen Vorrichtung eine Vielzahl von zuvor bestimmter Betriebsbereichen des einen oder der mehreren Modi der benutzergetragenen Vorrichtung umfassen, wobei ein zuvor bestimmter Betriebsbereich ein zuvor bestimmtes Ausrichtungsintervall, das Ausrichtungen des magnetischen Objekts angibt, umfasst,
- Bestimmen (640) eines Modus der benutzergetragenen Vorrichtung basierend auf dem Standort der benutzergetragenen Vorrichtung und auf den Daten des Modus der benutzergetragenen Vorrichtung,
- Darstellen (650) der benutzergetragenen Vorrichtung (100) auf der Ausgabevorrichtung (500) und
- Steuern (660) der Darstellung der benutzergetragenen Vorrichtung (100) gemäß dem bestimmten Modus der benutzergetragenen Vorrichtung.

2. Computerimplementiertes Verfahren (600) nach Anspruch 1, wobei die benutzergetragene Vorrichtung (100) auf einer Interaktionsoberfläche (210) bedienbar ist, das Verfahren umfassend:
Definieren eines Interaktionsoberflächenkoordinatensystems (xₛyₛzₛ) relativ zu der Interaktionsoberfläche (210), das Interaktionsoberflächenkoordinatensystem (xₛyₛzₛ) umfassend eine erste Interaktionsoberflächenachse (xₛ), eine zweite Interaktionsoberflächenachse (yₛ) und eine vertikale Interaktionsoberflächenachse (zₛ), wobei die erste Interaktionsoberflächenachse (xₛ) und die zweite Interaktionsoberflächenachse (yₛ) orthogonal zueinander sind und die Interaktionsoberfläche (210) definieren, und wobei die vertikale Interaktionsoberflächenachse (zₛ) orthogonal zu der ersten Interaktionsoberflächenachse (xₛ) und der zweiten Interaktionsoberflächenachse (yₛ) ist.

3. Computerimplementiertes Verfahren (600) nach einem der vorstehenden Ansprüche, umfassend:
Definieren eines Referenzkoordinatensystems (XYZ) relativ zu der Vielzahl von Magnetometern (300), das Referenzkoordinatensystem (XYZ) umfassend eine erste Referenzachse (X), eine zweite Referenzachse (Y) und eine vertikale Referenzachse (Z), wobei die erste Referenzachse (X) und die zweite Referenzachse (Y) orthogonal zueinander sind und wobei die vertikale Referenzachse (Z) orthogonal zu der ersten Referenzachse (X) und der zweiten Referenzachse (Y) ist und sich durch eine Mitte der Vielzahl von Magnetometern (300) hindurch erstreckt, wobei optional die erste Referenzachse (X) und die zweite Referenzachse (Y) auf einer Magnetometerebene (310) definiert sind, die der Vielzahl von Magnetometern (300) zugeordnet ist, wobei die Magnetometerebene (310) durch eine Ebene definiert ist, die sich durch eine Mehrheit der Vielzahl von Magnetometern (300) hindurch erstreckt, und wobei die vertikale Referenzachse (Z) orthogonal zu der Magnetometerebene (310) ist.

4. Computerimplementiertes Verfahren (600) nach einem der vorstehenden Ansprüche, wobei das Bestimmen (620) eines Standorts der benutzergetragenen Vorrichtung umfasst:
Bestimmen (621, 624) eines Standorts des magnetischen Objekts des mindestens einen magnetischen Objekts (110), der den Standort der benutzergetragenen Vorrichtung angibt, speziell, Bestimmen (621, 624) eines Positionsvektors, der eine Position des magnetischen Objekts angibt, und/oder Bestimmen (621, 624) eines Vektors (120) eines magnetischen Moments, der eine Ausrichtung eines magnetischen Objekts des mindestens einen magnetischen Objekts (110) angibt.

5. Computerimplementiertes Verfahren (600) nach einem der vorstehenden Ansprüche, wobei der Standort der benutzergetragenen Vorrichtung einen absoluten Standort der benutzergetragenen Vorrichtung in Bezug auf die Magnetometerebene (310) und/oder einen relativen Standort der benutzergetragenen Vorrichtung in Bezug auf die Interaktionsoberfläche (210) angibt.

6. Computerimplementiertes Verfahren (600) nach Anspruch 5, wobei das Bestimmen (620) eines Standorts der benutzergetragenen Vorrichtung, der einen relativen Standort der benutzergetragenen Vorrichtung angibt, umfasst:
Bestimmen (624) eines relativen Standorts des magnetischen Objekts, der eine relative Position des magnetischen Objekts in Bezug auf die Interaktionsoberfläche (210) und/oder eine relative Ausrichtung des magnetischen Objekts des mindestens einen magnetischen Objekts (110) in Bezug auf die Interaktionsoberfläche (210), noch spezieller auf das Interaktionsoberflächenkoordinatensystem (x_{S}y_{S}z_{S}), angibt.

7. Computerimplementiertes Verfahren (600) nach Anspruch 6, wobei die relative Ausrichtung des magnetischen Objekts durch einen zweiten Satz von Neigungswinkeln (γ1, γ2, γ3) des magnetischen Objekts, die zwischen der Interaktionsoberfläche (210) und dem Vektor (120) des magnetischen Moments bestimmt werden, definiert ist.

8. Computerimplementiertes Verfahren (600) nach einem der vorstehenden Ansprüche, sofern mindestens von Anspruch 3 abhängig, wobei ein zuvor bestimmter Betriebsbereich einen zuvor bestimmten Bereich von Standorten der benutzergetragenen Vorrichtung, der einem des einen oder der mehreren Modi der benutzergetragenen Vorrichtung zugeordnet ist, definiert, wobei besonders ein zuvor bestimmter Bereich von Standorten der benutzergetragenen Vorrichtung einen zuvor bestimmten Bereich von absoluten Standorten der benutzergetragenen Vorrichtung in Bezug auf die Magnetometerebene (310) und/oder einen zuvor bestimmten Bereich von relativen Standorten der benutzergetragenen Vorrichtung in Bezug auf die Interaktionsoberfläche (210) umfasst.

9. Computerimplementiertes Verfahren (600) nach einem der vorstehenden Ansprüche, wobei die Daten des Modus der benutzergetragenen Vorrichtung einen ersten zuvor bestimmten Betriebsbereich, der einem ersten Modus der benutzergetragenen Vorrichtung zugeordnet ist, einen zweiten zuvor bestimmten Betriebsbereich, der einem zweiten Modus der benutzergetragenen Vorrichtung zugeordnet ist, und einen dritten zuvor bestimmten Betriebsbereich, der einem dritten Modus der benutzergetragenen Vorrichtung zugeordnet ist, umfassen.

10. Computerimplementiertes Verfahren (600) nach einem der vorstehenden Ansprüche, sofern mindestens von Anspruch 4 abhängig, wobei ein zuvor bestimmter Betriebsbereich ein zuvor bestimmtes Positionsintervall, das die Positionen des magnetischen Objekts angibt, umfasst, wobei das zuvor bestimmte Positionsintervall ein Intervall einer Betriebsdistanz (Δz), die durch die z-Komponente des Positionsvektors definiert ist, und/oder ein Intervall eines Betriebsgebiets (ΔxΔy), das durch die x-Komponente und/oder y-Komponente des Positionsvektors definiert ist, umfasst.

11. Computerimplementiertes Verfahren (600) nach einem der vorstehenden Ansprüche, wobei ein Modus der benutzergetragenen Vorrichtung eine spezielle Art der benutzergetragenen Vorrichtung und/oder eine spezielle Funktion der benutzergetragenen Vorrichtung angibt.

12. Computerimplementiertes Verfahren (600) nach Anspruch 11, wobei ein Auswählen (642) eines Modus der benutzergetragenen Vorrichtung basierend auf dem Vergleich umfasst:
Ausschließen eines verglichenen Modus der benutzergetragenen Vorrichtung, wenn der bestimmte Standort der benutzergetragenen Vorrichtung den zuvor bestimmten Betriebsbereich dieses verglichenen Modus der benutzergetragenen Vorrichtung nicht erfüllt, und/oder
Auswählen eines verglichenen Modus der benutzergetragenen Vorrichtung, wenn der bestimmte Standort der benutzergetragenen Vorrichtung den zuvor bestimmten Betriebsbereich dieses verglichenen Modus der benutzergetragenen Vorrichtung erfüllt.

13. Computerimplementiertes Verfahren (600) nach einem der vorstehenden Ansprüche, wobei das Bestimmen (620) eines Standorts der benutzergetragenen Vorrichtung basierend auf den erfassten Magnetfeldmessungen über einen Zeitraum durchgeführt wird, wobei speziell das Bestimmen (640) eines Modus der benutzergetragenen Vorrichtung innerhalb des Zeitraums durchgeführt wird und wobei das Bestimmen (640) eines Modus der benutzergetragenen Vorrichtung umfasst:
Speichern (643) des bestimmten Modus der benutzergetragenen Vorrichtung in einem Speicher.

14. Computerimplementiertes Verfahren (600) nach Anspruch 13, wobei der Zeitraum eine Moduserkennungszeitphase umfasst, während der der Modus der benutzergetragenen Vorrichtung bestimmt und gespeichert wird, wobei optional das Bestimmen (640) eines Modus der benutzergetragenen Vorrichtung gestoppt wird, wenn die Moduserkennungszeitphase endet.

15. System (10) zum Steuern einer Darstellung einer benutzergetragenen Vorrichtung (100) gemäß einem oder mehreren Modi der benutzergetragenen Vorrichtung auf einer Ausgabevorrichtung (500), umfassend:
die benutzergetragene Vorrichtung(100), umfassend mindestens ein magnetisches Objekt (110),
eine Vielzahl von Magnetometern (300), die konfiguriert sind, um Magnetfeldmessungen, die dem mindestens einen magnetischen Objekt (110) zugeordnet sind, durchzuführen, und
eine Ausgabevorrichtung (500),
wobei das System (10) konfiguriert ist, um ein computerimplementiertes Verfahren (600) nach einem der Ansprüche 1 bis 14 auszuführen.

## Revendications

1. Procédé mis en œuvre par ordinateur (600) destiné à commander une représentation d'un dispositif porté par l'utilisateur (100) selon un ou plusieurs modes de dispositif porté par l'utilisateur sur un dispositif de sortie (500), dans lequel le procédé comprend :
- l'obtention (610) de mesures de champ magnétique associées à au moins un objet magnétique (110) et mesurées avec une pluralité de magnétomètres (300), dans lequel l'au moins un objet magnétique (110) est accouplé à l'appareil porté par l'utilisateur (100),
- la détermination (620) de l'emplacement d'un dispositif porté par l'utilisateur sur la base des mesures de champ magnétique collectées,
- l'obtention (630) des données de mode de dispositif porté par l'utilisateur indiquant des plages de fonctionnement prédéterminées du ou des modes de dispositif porté par l'utilisateur, dans lequel les données de mode de dispositif porté par l'utilisateur comprennent une pluralité de plages de fonctionnement prédéterminées du ou des modes de dispositif porté sur l'utilisateur, dans lequel une plage de fonctionnement prédéterminée comprend un intervalle d'orientation prédéterminé indiquant des orientations d'objets magnétiques
- la détermination (640) d'un mode de dispositif porté par l'utilisateur sur la base de l'emplacement de dispositif porté par l'utilisateur et des données de mode de dispositif porté par l'utilisateur,
- la représentation (650) du dispositif porté par l'utilisateur (100) sur le dispositif de sortie (500), et
- la commande (660) de la représentation du dispositif porté par l'utilisateur (100) selon le mode déterminé de dispositif porté par l'utilisateur.

2. Procédé mis en œuvre par ordinateur (600) selon la revendication 1, dans lequel le dispositif porté par l'utilisateur (100) est utilisable sur une surface d'interaction (210), le procédé comprenant :
la définition d'un système de coordonnées de surface d'interaction (xₛyₛzₛ) par rapport à la surface d'interaction (210), le système de coordonnées de surface d'interaction (xₛyₛzₛ) comprenant un premier axe de surface d'interaction (xₛ), un second axe de surface d'interaction (yₛ) et un axe de surface d'interaction vertical (zₛ), dans lequel le premier axe de surface d'interaction (xₛ) et le second axe de surface d'interaction (yₛ) sont orthogonaux entre eux et définissent la surface d'interaction (210), et dans lequel l'axe vertical de surface d'interaction (zₛ) est orthogonal au premier axe de la surface d'interaction (xₛ) et au second axe de surface d'interaction (yₛ).

3. Procédé mis en œuvre par ordinateur (600) selon l'une quelconque des revendications précédentes, comprenant :
la définition d'un système de coordonnées de référence (XYZ) par rapport à la pluralité de magnétomètres (300), le système de coordonnées de référence (XYZ) comprenant un premier axe de référence (X), un second axe de référence (Y) et un axe de référence vertical (Z), dans lequel le premier axe de référence (X) et le second axe de référence (Y) sont orthogonaux l'un par rapport à l'autre, et dans lequel l'axe de référence vertical (Z) est orthogonal au premier axe de référence (X) et au second axe de référence (Y) et s'étend à travers un centre de la pluralité de magnétomètres (300), éventuellement, dans lequel le premier axe de référence (X) et le second axe de référence (Y) sont définis sur un plan magnétométrique (310) associé à la pluralité de magnétomètres (300), dans lequel le plan magnétométrique (310) est défini par un plan qui s'étend à travers une majorité de la pluralité de magnétomètres (300), et dans lequel l'axe de référence vertical (Z) est orthogonal au plan magnétométrique (310).

4. Procédé mis en œuvre par ordinateur (600) selon l'une quelconque des revendications précédentes, dans lequel la détermination (620) d'un emplacement de dispositif porté par l'utilisateur comprend :
la détermination (621, 624) de l'emplacement d'objet magnétique de l'au moins un objet magnétique (110) qui indique l'emplacement de dispositif porté par l'utilisateur, en particulier, la détermination (621, 624) d'un vecteur de position indiquant une position d'objet magnétique et/ou la détermination (621, 624) d'un vecteur de moment magnétique (120) indiquant une orientation d'objet magnétique de l'au moins un objet magnétique (110).

5. Procédé mis en œuvre par ordinateur (600) selon l'une quelconque des revendications précédentes, dans lequel l'emplacement de dispositif porté par l'utilisateur indique un emplacement absolu du dispositif porté par l'utilisateur par rapport au plan de magnétomètre (310) et/ou un emplacement relatif de dispositif porté par l'utilisateur par rapport à la surface d'interaction (210).

6. Procédé mis en œuvre par ordinateur (600) selon la revendication 5, dans lequel la détermination (620) d'un emplacement de dispositif porté par l'utilisateur indiquant un emplacement relatif de dispositif porté par l'utilisateur comprend :
la détermination (624) d'un emplacement relatif d'objet magnétique indiquant une position relative d'objet magnétique par rapport à la surface d'interaction (210) et/ou une orientation relative d'objet magnétique (110) par rapport à la surface d'interaction (210), plus en particulier par rapport au système de coordonnées de surface d'interaction (xₛyₛzₛ).

7. Procédé mis en œuvre par ordinateur (600) selon la revendication 6, dans lequel l'orientation relative d'objet magnétique est définie par un second ensemble d'angles d'inclinaison d'objet magnétique (γ1, γ2, γ3) déterminés entre la surface d'interaction (210) et le vecteur de moment magnétique (120).

8. Procédé mis en œuvre par ordinateur (600) selon l'une quelconque des revendications précédentes, si elle dépend au moins selon la revendication 3, dans lequel une plage de fonctionnement prédéterminée définit une plage prédéterminée d'emplacements de dispositifs portés par l'utilisateur associés au ou aux modes de dispositifs portés par l'utilisateur, en particulier, dans lequel une plage prédéterminée d'emplacements de dispositifs portés par l'utilisateur comprend une plage prédéterminée d'emplacements absolus de dispositifs portés par l'utilisateur par rapport au plan du magnétomètre (310), et/ou une plage prédéterminée d'emplacements relatifs de dispositifs portés par l'utilisateur par rapport à la surface d'interaction (210).

9. Procédé mis en œuvre par ordinateur (600) selon l'une quelconque des revendications précédentes, dans lequel les données relatives au mode de fonctionnement de dispositif porté par l'utilisateur comprennent une première plage de fonctionnement prédéterminée associée à un premier mode de fonctionnement de dispositif porté par l'utilisateur, une deuxième plage de fonctionnement prédéterminée associée à un deuxième mode de fonctionnement de dispositif porté par l'utilisateur et une troisième plage de fonctionnement prédéterminée associée à un troisième mode de fonctionnement de dispositif porté par l'utilisateur.

10. Procédé mis en œuvre par ordinateur (600) selon l'une quelconque des revendications précédentes, si elle dépend au moins de la revendication 4, dans lequel une plage de fonctionnement prédéterminée comprend un intervalle de position prédéterminé indiquant les positions d'objets magnétiques, dans lequel l'intervalle de position prédéterminé comprend un intervalle d'une distance de fonctionnement (Δz) définie par la composante z du vecteur de position et/ou un intervalle d'une zone de fonctionnement (ΔxΔy) définie par la composante x et/ou la composante y du vecteur de position.

11. Procédé mis en œuvre par ordinateur (600) selon l'une quelconque des revendications précédentes, dans lequel un mode de dispositif porté par l'utilisateur indique un type de dispositif porté par l'utilisateur spécifique et/ou une fonction de dispositif porté par l'utilisateur spécifique.

12. Procédé mis en œuvre par ordinateur (600) selon la revendication 11, dans lequel la sélection (642) d'un mode de dispositif porté par l'utilisateur sur la base de la comparaison comprend :
l'exclusion d'un mode de dispositif porté par l'utilisateur comparé, lorsque l'emplacement déterminé du dispositif porté par l'utilisateur ne correspond pas à la plage de fonctionnement prédéterminée de ce mode de dispositif porté par l'utilisateur comparé, et/ou
la sélection d'un mode de dispositif porté par l'utilisateur comparé, lorsque l'emplacement déterminé du dispositif porté par l'utilisateur remplit la plage de fonctionnement prédéterminée de ce mode de dispositif porté par l'utilisateur comparé.

13. Procédé mis en œuvre par ordinateur (600) selon l'une quelconque des revendications précédentes, dans lequel la détermination (620) d'un emplacement de dispositif porté par l'utilisateur sur la base des mesures de champ magnétique collectées est effectuée sur une période de temps, en particulier, dans lequel la détermination (640) d'un mode de dispositif porté par l'utilisateur est effectuée dans la période de temps, et dans lequel la détermination (640) d'un mode de dispositif porté par l'utilisateur comprend :
le stockage (643) du mode déterminé du dispositif porté par l'utilisateur dans une mémoire.

14. Procédé mis en œuvre par ordinateur (600) selon la revendication 13, dans lequel la période de temps comprend une phase de temps de reconnaissance de mode au cours de laquelle le mode du dispositif porté par l'utilisateur est déterminé et stocké, éventuellement, dans lequel la détermination (640) d'un mode de dispositif porté par l'utilisateur est arrêtée lorsque la phase de temps de reconnaissance de mode se termine.

15. Système (10) de commande d'une représentation d'un dispositif porté par l'utilisateur (100) selon un ou plusieurs modes de dispositif porté par l'utilisateur sur un dispositif de sortie (500), comprenant :
le dispositif porté par l'utilisateur (100) comprenant au moins un objet magnétique (110),
une pluralité de magnétomètres (300) configurés pour effectuer des mesures de champ magnétique associées à au moins un objet magnétique (110), et
un dispositif de sortie (500),
dans lequel le système (10) est configuré pour exécuter un procédé mis en œuvre par ordinateur (600) selon l'une quelconque des revendications 1 à 14.
